# EUROPEAN PATENT APPLICATION

(11) **EP 2 051 149 A2**
(43) Date of publication of application: **22.04.2009**
(21) Application number: 08380200.9
(22) Date of filing: 07.07.2008
(51) Int. Cl.: G04G 1/00

(54) **Wristwatch.**

(30) Priority: 18.10.2007 ES 200702121 U
(71) Applicant: Gonzalez-Blanch, Carmen Villatoro, 28033 Madrid (ES)
(72) Inventor: Gonzalez-Blanch, Carmen Villatoro, 28033 Madrid (ES)
(74) Representative: Aymat Gonzalez, José Maria

(57) **Abstract**

Wristwatch (1) that while supplying information on the time by a digital screen (3) incorporates all the elements necessary for its use also as a mobile telephone. A wristwatch and a mobile telephone are grouped in a single object, having the usual features of both.

## Description

This invention refers to a clock, more specifically to a wristwatch, that besides carrying out its basic function as a watch, it offers the complementary features of a mobile telephone.

Therefore, the purpose of the invention is to group together in a single object a wristwatch and a mobile telephone, so that with a slight increase in the volume of the watch one can eliminate the need to carry with them a complementary object for the mobile telephone features.

### BACKGROUND OF THE INVENTION

In the area of clock-making, and more specifically of watch-making, there are two basic types: that in which the time indication is carried out by physical and moveable hands, and another in which a digital screen is used on which the information that the watch is capable of providing is shown at every moment.

The common denominator of both types of watches and which is of concern here, consists of dealing with reliable elements on the user's wrist, that are transported with great ease and comfort.

There are, furthermore and in a totally independent form, mobile telephones with more or fewer features, and that in turn present as the common denominator the problem of transporting it, since this type of telephone, for its very nature, is conceived so that the user always carries it with him, and its volume and weight make it very uncomfortable to carry it, for example, in the pocket of an item of clothing, for which reason one usually uses a handbag, a case fastened to a belt, etc.

In addition to this problem of inconvenience of transport, when the mobile telephone is turned to a low acoustic level, depending on the place in which it is housed or transported, there is a high risk that the user does not hear the call, as well as an additional risk that the call is missed due to the long time needed to locate the telephone, as occurs frequently when it is carried in a woman's purse among a notable amount of belongings that to a greater or lesser degree make access to it difficult.

### DESCRIPTION OF THE INVENTION

The wristwatch that the invention proposes solves in a fully satisfactory manner the problems expressed above, as besides carrying out its basic function as a measurer of time, it offers the features of a mobile telephone, which by being integrated in the watch, eliminates all the problems of volume, weight, difficulty of locating it, etc., which were mentioned previously.

Therefore, the watch that is recommended can be materialised in any classic wristwatch without further conditioning than being provided with a digital screen, which normally shows the watch face, but that possibly will be transformed in a support for data entry and extraction, when the watch is used as a mobile telephone. The watch's circuit is conveniently designed so that upon introducing the same SIM card it becomes a mobile telephone and so that the aforementioned digital screen becomes in turn the usual interface in this type of devices, workable through the corresponding keys.

The design of the watch's circuit has been made to be compatible with any GSM card, with the watch having a colour screen, an internal antenna, a USB connector, etc., and offering the same features that a conventional mobile telephone can offer, being capable of receiving SMS messages, bluetooth connection, MP3, MP4, GPS function, heart rate measurement, etc.

Specifically on its case, and more specifically on its lower marginal area, are the menu keys and two lateral numeric keys that serve for turning the mobile telephone on and off, as well as for making any call, while the immediately interior keys have the function of the numeric keys, sequentially selecting the numbers by means of pressing them successively.

Near this lower area of the watch is a microphone/speaker, while on the other side of the watchcase is placed the USB connection for transmitting data to a computer.

Finally, the watchcase is provided with a back lid with a bayonet clasp that permits easy access to the battery that is used for the watch and the mobile, as well as for the SIM card.

### DESCRIPTION OF THE DRAWINGS

In order to complement the description that is being presented and for the purpose of providing a greater understanding of the invention's characteristics, according to a preferred example of its practical realisation, a set of drawings is attached as an integral part of this description, where the following figures are provided as an example but are not limited to what is represented:

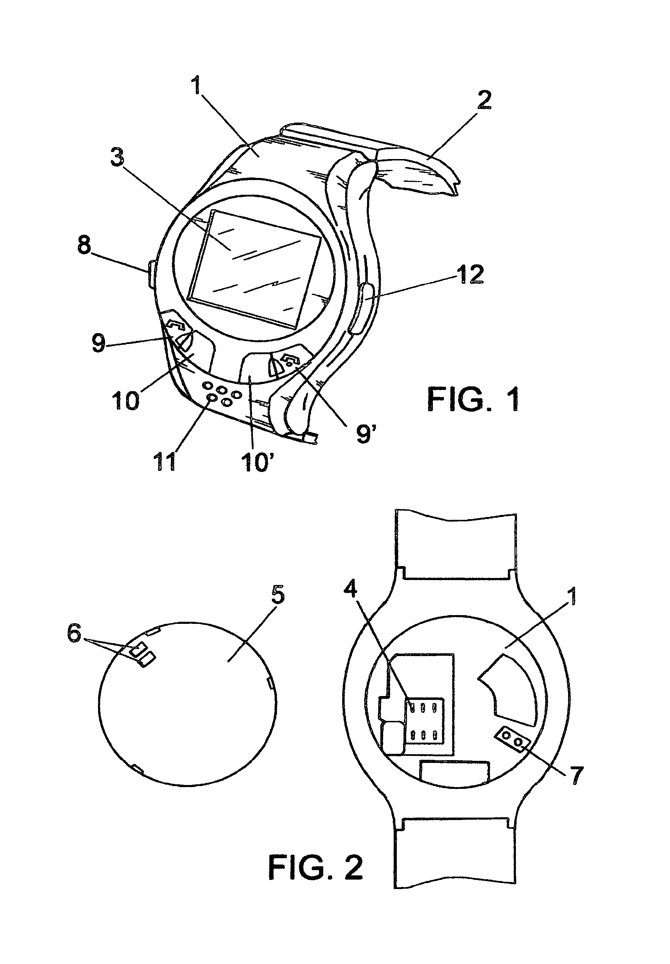

Figure 1. It shows, according to a general representation in perspective, a wristwatch made in accordance with the purpose of this invention.
Figure 2. It shows a back view of the watchcase, with the lid removed and next to which the battery has been represented that substitutes the conventional battery.

### PREFERRED REALISATION OF THE INVENTION

In view of the figures indicated, one can observe how the wristwatch that is recommended is comprised of a body or case (1), with its corresponding wristband (2); said body (1) inevitably must have a digital screen (3), on which the corresponding time is usually projected.

From the basic and conventional structuring, the watch that the invention proposes centres its characteristics on the incorporation in its heart the appropriate circuitry for a mobile telephone, capable of receiving (4) a SIM card accessible through the back lid of the body (1), not shown in the drawings, connected to the body (1) preferably by a bayonet clasp and with the interposition of the battery (5), materialised in a disk preferably with the maximum dimensions that permit its fitting into the case (1), and with a pair of terminals (6) that in inserting the battery are confronted with a connector (7) operatively established in the inside of the case (1) and which feeds the SIM card (4), the screen (3) and any other elements of the watch that require energy consumption for their functioning.

In order to fulfil its function as a mobile telephone, the watch that is recommended incorporates in its case or body (1) a menu key (8), a pair of keys (9-9') to turn on or off the telephone as well as to place a call, another pair of keys (10-10'), immediately adjacent to the previous ones, specifically numeric keys of which one of them through sequential pressing permits dialling the first five numbers and the other permits dialling the other five, being located on the edge of the case and between the abovementioned two last keys (10-10') a microphone/speaker (11).

As a complement of the described structure, it also incorporates in its case (1) a USB connection (12) for transmission of data to a computer, also being able to have a Bluetooth data transmission module.

The electronics of the watch together with the programming software will permit carrying out the usual operations that the mobile telephones offer, such as the downloading/reproduction of MP3, MP4 files, GPS functions, voice recording, alarm, heart rate measurement, pulsimeter, etc.

It only remains to point out that, as is evident, so that the watch may function also as a mobile telephone, it must have an antenna, which will be conveniently located in its interior.

## Claims

1. Wristwatch that being the type that incorporates a digital screen as the means of supplying information on the time, is **characterised by** incorporating in it additional electronics to which is associated a SIM card, an antenna, a microphone/speaker, as well as additional controls for the device, that permits the complementary use of the watch as a mobile telephone.

2. Wristwatch, according to claim 1, **characterised** because the digital screen is in colour, in its case there is a USB connector, as well as a Bluetooth-type wireless data transmission module.

3. Wristwatch, according to the previous claims, **characterised** because on its case there is a "menu" key, a pair of keys for turning the telephone on and off and for calling, and another pair of numeric keys, used sequentially.

4. Wristwatch, according to the previous claims, **characterised** because it incorporates means for sending/receiving SMS messages, downloading/reproduction of MP3 and MP4 files, GPS function, heart rate measurement, as well as the remainder of the usual features in a mobile telephone.
